Europäisches Patentamt

European Patent Office

Office européen des brevets

(11) Publication number: **0 438 891 A1**

# EUROPEAN PATENT APPLICATION

(21) Application number: 90313668.7

(22) Date of filing: 14.12.90

(51) Int. Cl.⁵: **B23K 1/08**, H05K 3/34

(30) Priority: 20.01.90 GB 9001361

(43) Date of publication of application:
31.07.91 Bulletin 91/31

(84) Designated Contracting States:
CH DE FR IT LI NL

(71) Applicant: BLUNDELL PRODUCTION
EQUIPMENT LIMITED
203 Torrington Avenue
Coventry CV4 9UT(GB)

(72) Inventor: Edmonson, John, c/o Blundell Prod.
Equipment Ltd.
203 Torrington Avenue
Coventry CV4 9UT(GB)

(74) Representative: Cowan, David Robert et al
E.N. Lewis & Taylor, 5 The Ouadrant
Coventry CV1 2EL(GB)

(54) **Soldering apparatus.**

(57) Soldering apparatus is for applying solder to circuit boards.

A flow of solder 14 is set up to flow from a molten solder tank over a weir 13, the circuit boards 32 being conveyed passed the weir in contact with the flow 14. To improve the contact between the solder and the circuit board a series of closely spaced waves are set up in the flow by varying the rate of flow provided by a pump 18. The pump is driven by a motor 28, whose rotational speed can be varied cyclically.

FIG 1

## SOLDERING APPARATUS

This invention relates to soldering apparatus in particular apparatus by which solder is applied to, for example, printed circuit boards.

In the production of printed circuit boards there is conventionally provided apparatus by which the circuit boards have applied to selected areas of a surface thereof solder for effecting connections between the components. Such apparatus supplies molten solder in a moving wave through which the circuit boards are transported. The solder is applied to the selected areas and solidifies thereon during such movement.

With some configurations of circuit board the solder does not always become applied adequately to the selected areas and it is an object of the invention to overcome this problem.

According to one aspect of the invention soldering apparatus includes tank means for molten solder, a weir over which the molten solder is passed to form a moving flow of solder, and pump means whereby the solder is pumped over said weir, wherein the pump means includes a drive motor for driving a solder pump and control means for the drive motor, which is conveniently a stepping motor, the control means so controlling the drive motor that it rotates at a variable speed thereby driving the solder pump at a variable rate to obtain a variable solder output over the weir.

The control means may be arranged so that the rate and frequency of variation of the motor speed is adjustable.

By variation of the motor speed it has been found that the rate at which the solder is pumped by the solder pump varies and this variation sets up a flow of solder across the weir which also varies in such a manner that closely spaced waves of solder are formed in the flow of solder and the solder flow appears to vibrate. Such a vibration in the flow of solder as it contacts circuit boards passing through the flow of solder has the effect of contacting and being retained on the selected areas of the circuit board, thereby setting up more reliable connections in the circuit board. The frequency and amplitude of the waves are controlled according to the variation in speed and frequency of change of speed of the drive motor. Preferably the change of speed occurs between 0.5 and 7.0 times per motor revolution and the variation in speed is in the range of 2%-20% of the mean speed of the motor.

Preferably the pump is in the form of a helical or spiral pump having a drive shaft coupled to the drive motor and arranged to circulate the molten solder through the tank means and over the weir.

According to another aspect of the invention in a method of soldering, solder is pumped by pump means over a weir by which a flow of solder is generated over the weir. The method is characterised in that the operation of the pump means is controlled so that the flow of solder comprises a succession of closely spaced waves arranged to contact the article to be soldered, the waves being generated by controlling and varying the speed of operation of the pump means.

Further features of the invention will appear from the following description of an embodiment of the invention given by way of example only and with reference to the drawings, in which:-

Fig. 1 is a schematic cross-sectional elevation,

Fig. 2 is a perspective view from above, and

Fig. 3 is a section in a direction at a right angle to the view shown in Fig. 1.

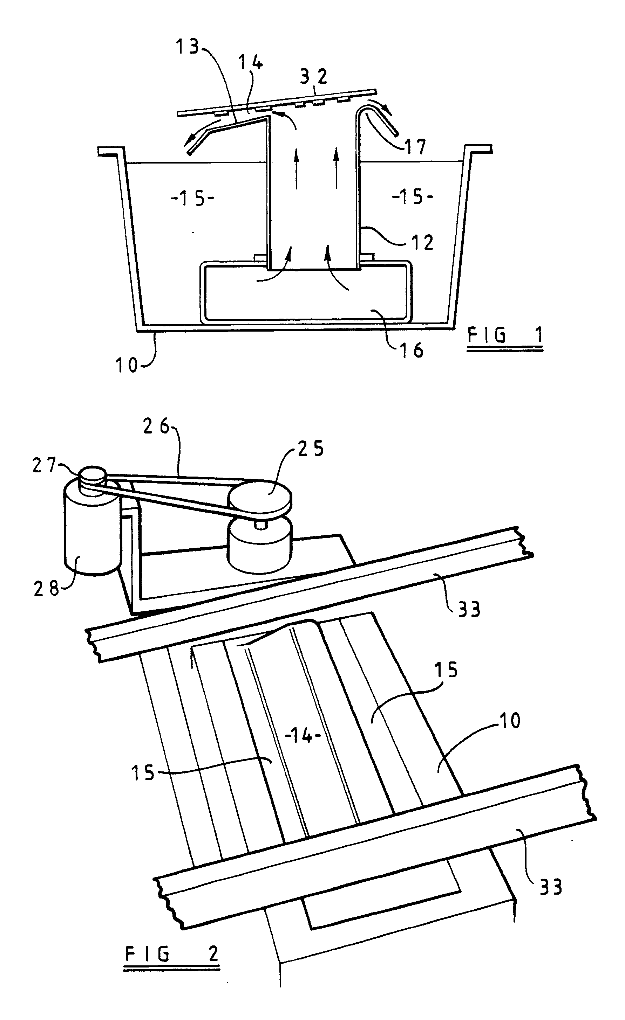

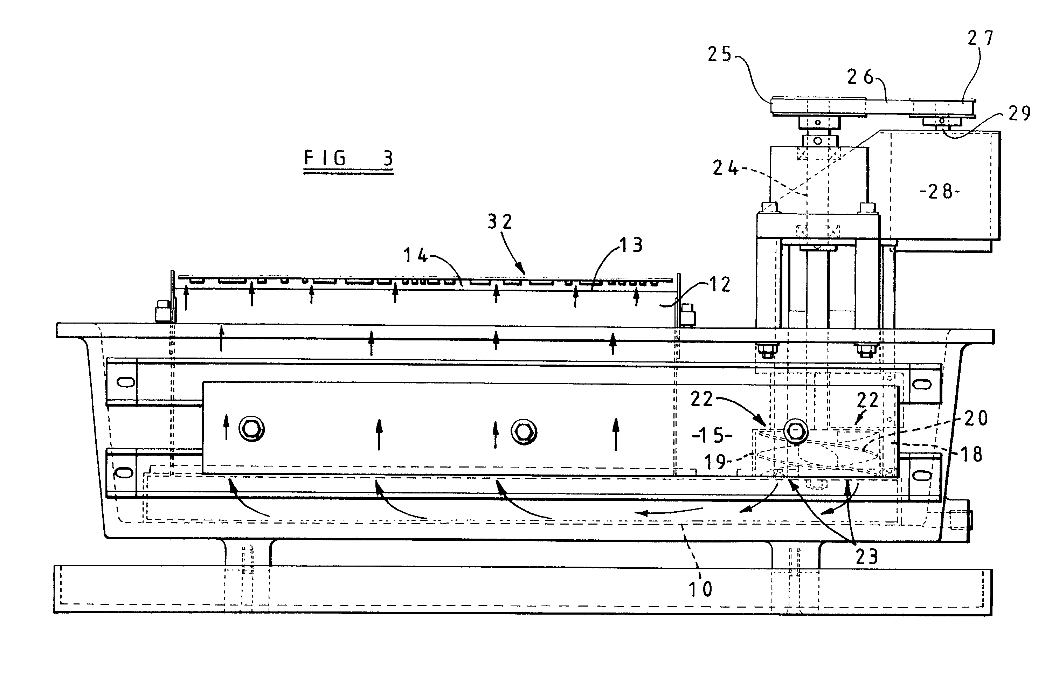

Referring to the drawings there is shown a soldering station in soldering apparatus in which printed circuit boards are prepared for soldering and solder is applied thereto. In the apparatus the circuit boards are treated and heated as they pass to the soldering station. The apparatus includes a circuit board conveyor system to transport the boards between the stations as will be described.

This application is concerned with the soldering stage of the apparatus.

A solder pot or tank 10 is provided which has heating means (not shown) for keeping the solder 11 in the tank at a predetermined temperature at which the solder is molten or liquid.

Within the tank 10 is located a solder nozzle 12 through which the solder is directed during operation to pass over a weir 13 at the upper end of the nozzle and forms a wave or layer 14 of moving solder of a thickness determined by the level of solder in the nozzle 12 and an overflow weir 17.

The nozzle 12 is surrounded by a reservoir 15 of molten solder in the tank 10 and at its lower end the nozzle is supplied from ducting 16 communicating with the reservoir 15.

To cause the flow of solder from the reservoir 15 to the ducting 16, up the nozzle 12 and over the weir 13, there is provided a pump 18 which draws solder from the reservoir 15 and passes it to the ducting 16.

The pump 18 is a helical or spiral pump having a cylindrical body 19 in which is located an impeller 20 which rotates about a generally vertical axis. The pump 18 is open-ended having an upper inlet opening 22 and a lower outlet opening 23, the latter communicating with the ducting 16.

The impeller 20 is carried on a vertically upwardly-directed drive shaft 24 the upper end of which carries a pulley 25 which is driven by a belt 26 from a drive pulley 27. The pulley 27 is carried on the drive shaft 29 of a motor 28.

The motor 28 is a stepping motor of known form which is driven in such a manner that the rotational speed of the motor 28 varies cyclically. Control means of known form controls the rate and amount of variation in the rotational speed of the motor.

It has been found that the variation of the rotational speed of the motor 28 which causes the rotational speed of the pump 18 to vary correspondingly, sets up a variable rate of flow of the molten solder over the weir 13 such that the solder flows in closely spaced waves and appears to vibrate as it flows over the weir. Such vibration assists in the even and complete deposition of solder on circuit boards 32 in contact with the solder.

It is preferred that the cyclical variation in speed of the motor occurs between 0.66 and 6.66 times per motor revolution and that the variation in speed is in the range 2% to 20% from the mean speed. The amplitude and frequency of the variation in speed may be adjusted according to other variable factors, such as a variation in the kind of circuit board being treated with solder and/or the solder viscosity.

Variation of the motor parameters is achieved by the control means which feeds the desired power supply to the motor, the control means including programming means for such supply and the signals from such programming means being variable.

Other motors than stepping motors may be used if the motors are capable of providing the rotational speed variations required.

The variable rate of flow of solder over the weir presents itself as a series of closely spaced waves in the flow, that is the surface of the solder is uneven having moving raised bands of solder extending transversely of the flow, the bands having a spacing from each other and a height depending on the frequency and amplitude of vibration.

The circuit boards 32 to be soldered are transported on a conveyor system (not shown) mounted for movement in guides 33 extending to the sides of the apparatus. The height at which the boards 32 pass the solder is carefully controlled so that the solder contacts the downwardly facing surface of the boards and adheres to selected areas of the boards in known manner. By the apparatus of the invention a more satisfactory application of the solder to the selected areas is achieved

## Claims

1. Soldering apparatus comprising tank means 10 for molten solder, a weir 13 over which the molten solder is passed to form a moving flow of solder 14 over the weir, and pump means 18,28 whereby the solder is pumped over said weir, characterised in that the pump means includes a drive motor 28 for driving a solder pump 18 and control means for the drive motor in which the control means controls the drive motor 28 so that it rotates at a variable speed thereby driving the solder pump 18 at a variable rate to obtain a variable solder output over the weir.

2. Soldering apparatus according to claim 1 characterised in that the drive motor 28 is a stepping motor and the control means is arranged to adjust the rate and frequency of variation of the motor speed.

3. Soldering apparatus according to claim 1 or 2 wherein the variation in motor speed sets up a succession of closely spaced waves in the flow of solder 14 over the weir 13 and articles 32 to be soldered are conveyed over the weir 13 to be contacted by the waves of solder 14.

4. Soldering apparatus according to claim 3 characterised in that the frequency and amplitude of the waves 14 are controlled according to the variation in speed and the frequency of change of speed of the drive motor 28.

5. Soldering apparatus according to any one of the preceding claims characterised in that the variation in speed of the drive motor 28 occurs between 0.5 and 7.0 times per motor revolution and the variation in speed is in the range of 2%-20% of the mean speed of the motor.

6. Soldering apparatus according to any one of the preceding claims characterised in that the pump 18 is in the form of a helical or spiral pump.

7. Soldering apparatus according to any one of the preceding claims characterised in that the motor 28 is coupled to the pump 18 by a drive shaft, the pump is arranged to circulate molten solder through the tank means 10 and over the weir 13 and the pump includes an impeller 20 rotating within a cylindrical body 19, solder from the pump passing upwards to the weir 13 through a nozzle 12.

8. In a method of soldering, solder is pumped by pump means 18,28 over a weir 13 by which a flow of solder 14 is generated over the weir 13 characterised in that the operation of the pump means is controlled so that the flow of solder 14 comprises a succession of closely spaced waves arranged to contact the article to be soldered, the waves being generated by controlling and varying the speed of operation of the pump means.

FIG 1

FIG 2

F I G 3

European
Patent Office

EUROPEAN SEARCH
REPORT

Application Number

EP 90 31 3668

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IBM TECHNICAL DISCLOSURE BULLETIN. vol. 26, no. 4, September 1983, NEW YORK US pages 1947 - 1948; P. L. BARON et al.: "OIL SEAL/BEARING SOLDER FOUNTAIN" * page 1948, lines 23 - 34; figure 1 * — — — | 1,6,7 | B 23 K 1/08 H 05 K 3/34 |
| X | IBM TECHNICAL DISCLOSURE BULLETIN. vol. 24, no. 9, February 1982, NEW YORK US pages 4694 - 4695; P. L. BARON et al.: "TUBE-PROPELLED JET SOLDER FOUN-TAIN" * page 4695, lines 34 - 50 * — — — | 1 | |
| A | IBM TECHNICAL DISCLOSURE BULLETIN. vol. 24, no. 5, October 1981, NEW YORK US pages 2573 - 2574; V. D._COOMBS et al.: "SUBMERGED SOLDER WAVE TRANSDUCER" * page 2574, lines 16 - 19; figure 1 * — — — — — | 1,3,8 | |

|  |  |  | TECHNICAL FIELDS SEARCHED (Int. Cl.5) |
|---|---|---|---|
|  |  |  | B 23 K H 05 K |

**The present search report has been drawn up for all claims**

| Place of search | Date of completion of search | Examiner |
|---|---|---|
| Berlin | 19 April 91 | WUNDERLICH J E |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

                                   

& : member of the same patent family, corresponding
    document